# EUROPÄISCHE PATENTSCHRIFT

(11) **EP 0 765 407 B1**
(45) Veröffentlichungstag und Bekanntmachung des Hinweises auf die Patenterteilung: **06.08.1997**
(21) Anmeldenummer: 96908909.3
(22) Anmeldetag: 02.04.1996
(51) Int. Cl.: D01F 2/00, C08J 5/18, D01D 1/02, C08J 3/09

(54) **ANLAGE SOWIE INTEGRIERTES FOLIEN- UND FASERWERK ZUR HERSTELLUNG CELLULOSISCHER FOLIEN UND FASERN**
PLANT AND INTEGRATED CELLULOSE FOIL AND FIBRE MANUFACTURING WORKS
INSTALLATION ET MECANISME INTEGRE POUR LA PRODUCTION DE FEUILLES ET DE FIBRES DE CELLULOSE

(30) Priorität: 19.04.1995 AT 674/95
(43) Veröffentlichungstag der Anmeldung: 02.04.1997
(73) Patentinhaber: LENZING AKTIENGESELLSCHAFT, 4860 Lenzing (AT)
(72) Erfinder: ZIKELI, Stefan, A-4844 Regau (AT)
(74) Vertreter: Schwarz, Albin, Dr. Kopecky & Schwarz Patentanwälte
(86) Internationale Anmeldenummer: AT9600065
(87) Internationale Veröffentlichungsnummer: WO9633302

(56) Entgegenhaltungen:
- EP-A- 0 356 419
- WO-A-94/06530
- WO-A-94/28214
- WO-A-94/28217
- US-A- 4 246 221
- INGENIEURWISSEN, 1980, DÜSSELDORF, Seiten 69-97, XP000572950 E HEIMGARTNER: "Devolatilisation in th thin-film vaporiser" in der Anmeldung erwähnt
- INGENIEURWISSEN, 1980, DÜSSELDORF, Seiten 69-97, XP000572950 E HEIMGARTNER: "Devolatilisation in th thin-film vaporiser"

## Beschreibung

Die vorliegende Erfindung betrifft eine Anlage sowie ein integriertes Folien- und Faserwerk zur Herstellung cellulosischer Folien, Fasern, Membranen oder anderer Formkörper nach dem Aminoxidverfahren. Die vorliegende Erfindung betrifft ferner ein Verfahren zur Herstellung cellulosischer Folien, Fasern, Membranen etc. nach dem Aminoxidverfahren.

Aus der US-PS 2,179,181 ist bekannt, daß tertiäre Aminoxide Cellulose zu lösen vermögen und daß aus diesen Lösungen durch Fällung in einem wäßrigen Medium cellulosische Formkörper hergestellt werden können. Ein derartiges Verfahren wird für die Zwecke der vorliegenden Beschreibung und Patentansprüche als "Aminoxidverfahren" bezeichnet.

In der US-A - 4,246,221 ist ein Aminoxidverfahren zur Herstellung spinnbarer Celluloselösungen beschrieben, welches als Ausgangsmaterial u.a. eine Mischung von Cellulose in wäßrigem N-Methylmorpholin-N-oxid (NMMO) verwendet. Das vorbekannte Verfahren wird diskontinuierlich durchgeführt und weist bis zur spinnbaren Lösung folgende 4 Schritte auf:
1. Behandeln einer Mischung von Zellstoff, der etwa 6 Masse% Wasser enthält, in einer wäßrigen Lösung von NMMO in einem Mischgefäß, indem die Mischung einem Vakuum und erhöhter Temperatur ausgesetzt und wobei eine erste Lösung gebildet wird,
2. Zwischenlagern der ersten Lösung in einem Tank,
3. Zwischenfiltrieren der Lösung, und
4. Nachbearbeiten der ersten Lösung in einem Extruder, um die spinnbare Lösung zu erhalten.

Gemäß diesem Verfahren kann Cellulose nur diskontinuierlich gelöst werden, was darüberhinaus viel Zeit in Anspruch nimmt. Allein der erste Schritt nimmt 1 Stunde und 20 Minuten in Anspruch. In dieser Zeitspanne wird der Zellstoff bei einer Temperatur von über 100°C der Aminoxidlösung ausgesetzt. Dies führt zu einem beträchtlichen Abbau der Cellulose und des Aminoxids und zu unerwünschten Nebenprodukten, worunter die Eigenschaften der hergestellten Fasern leiden. Außerdem birgt die große Menge Aminoxid, die pro Charge verarbeitet wird, eine Explosionsgefahr, die in der thermischen Instabilität des Aminoxids und in einem möglichen Abbau des Polymerisationsgrades der Cellulose begründet ist.

Demgegenüber ist mit der im Jahre 1990 veröffentlichten EP-A-0 356 419 eine Technik bekannt geworden, mit der die mehrstufige Extrudertechnik, wie sie beispielsweise in der US-A-4,246,221 beschrieben ist, überwunden werden konnte und eine Suspension von Cellulose in einer wäßrigen Lösung eines Aminoxides kontinuierlich und sogar in einem einzigen Schritt in eine spinnbare Lösung übergeführt werden kann. Gemäß dieser Technik wird zunächst die Suspension unter intensivem Mischen schichtartig auf einer Heizfläche ausgebreitet und behandelt, indem sie unter intensivem Mischen über die Heizfläche transportiert wird, wobei sich die Schicht erwärmt.
Gleichzeitig wird die Schicht während der Behandlung einem Unterdruck derart ausgesetzt, daß Wasser verdampft und jene Konzentrationsverhältnisse eingestellt werden, die es gemäß dem Zustandsdiagramm für das ternäre Stoffgemisch Cellulose/Aminoxid/Wasser (siehe z.B. WO94/28212) gestatten, daß die Auflösung der Cellulose stattfindet.

Das oben beschriebene Dünnschichtbehandlungsverfahren wird zweckmäßigerweise in einem Apparat durchgeführt, wie er in der EP-A - 0 356 419 beschrieben ist. Dieser Apparat wird als Dünnschichtbehandlungsapparat bezeichnet. Eine Ausführungsform eines Dünnschichtbehandlungsapparates ist beispielsweise ein sogenannter Filmtruder, wie er von der Firma Buss AG (Schweiz) hergestellt wird. Ein Dünnschichtbehandlungsapparat ist auch in der DE-OS 2 011 493 beschrieben.

Die im Jahre 1994 veröffentlichte WO 94/06530 benützt die aus der EP-A - 0 356 419 vorbekannte Dünnschichttechnik, um aus einer Mischung von Cellulose in einer wäßrigen Lösung eines tertiären Aminoxides zu einer formbaren Lösung zu gelangen. Das Verfahren wird analog einer in der EP-A - 0 356 419 vorbeschriebenen Ausführungsform in einem Filmtruder durchgeführt. Das Verfahren der WO 94/06530 stellt sich die Aufgabe, Energie zu sparen und schlägt zur Lösung dieser Aufgabe vor, den Rotor langsamer zu drehen.

Die vorliegende Erfindung stellt sich zur Aufgabe, eine Anlage und ein Verfahren zur Herstellung cellulosischer Folien und Fasern zur Verfügung zu stellen, wobei als Ausgangsprodukt eine Suspension von Zellstoff in einer wäßrigen Aminoxidlösung eingesetzt wird, welche Suspension eine Trockenstoffdichte von nicht über 10 Masse% Trockenzellstoff aufweist. Diese Art Ausgangsmaterial besitzt einen hohen Wassergehalt und daher eine niedrige Konsistenz.

Die erfindungsgemäße Anlage zur Herstellung cellulosischer Folien und Fasern nach dem Aminoxidverfahren weist im wesentlichen folgende Komponenten auf:
- eine Mischvorrichtung zur Herstellung einer ersten Suspension von Zellstoff in einer wäßrigen Aminoxidlösung, welche Suspension eine Trockenstoffdichte von nicht mehr als 10 Masse% Trockenzellstoff aufweist;
- eine Vorrichtung zur Aufkonzentrierung der in der Mischvorrichtung hergestellten ersten Zellstoffsuspension, in welcher Vorrichtung die Zellstoffsuspension auf einer Heizfläche mechanisch schichtartig ausgebreitet, erwärmt und unter intensivem Mischen und unter Abdampfung von Wasser über diese Heizfläche transportiert wird, bis eine vorbestimmte Menge Wasser abgedampft und eine konzentrierte Zellstoffsuspension gebildet ist;
- eine weitere Vorrichtung, vorzugsweise ein Dünnschichtbehandlungsapparat, in welchem die gebildete konzentrierte Zellstoffsuspension in eine formbare Lösung von Cellulose übergeführt wird, und
- eine mit dieser Vorrichtung bzw. dem Dünnschichtbehandlungsapparat verbundene zusätzliche Vorrichtung, in welcher die formbare Celluloselösung zu cellulosischen Folien, Fasern etc. verarbeitet wird.

Es hat sich gezeigt, daß es bei Verarbeitung einer Suspension von sehr feuchtem Zellstoff, das ist Zellstoff mit einem Wassergehalt von über 10 Masse%, in einer wäßrigen Aminoxidlösung, oder bei Verarbeitung einer Suspension von Zellstoff in einer Aminoxidlösung mit einem sehr hohen Wassergehalt, zweckmäßig ist, den Zellstoff zuerst in der wäßrigen Aminoxidlösung unter Verwendung einer Mischvorrichtung homogen zu suspendieren, wobei das Suspendieren ohne Abdampfen von Wasser vorgenommen wird, die homogene Suspension dann in eine weitere Vorrichtung überzuführen, um sie mit Hilfe der Schichttechnik, insbesondere der Dünnschichttechnik, aufzukonzentrieren, um eine konzentrierte Suspension herzustellen, und dann die konzentrierte Suspension einer dritten Vorrichtung zuzuführen, in welcher sie in eine Lösung übergeführt wird.

Eine bevorzugte Ausgestaltung der erfindungsgemäßen Anlage ist dadurch gekennzeichnet, daß die Vorrichtung zur Aufkonzentrierung der ersten Zellstoffsuspension als Dünnschichtbehandlungsapparat ausgebildet ist.

Falls in der erfindungsgemäßen Anlage eine diskontinuierlich arbeitende Mischvorrichtung eingesetzt wird, sollten mindestens zwei derartige Mischvorrichtungen vorgesehen werden, welche abwechselnd den kontinuierlich arbeitenden Dünnschichtbehandlunsgapparat speisen. Auf diese Weise kann ein kontinuierlicher Gesamtbetrieb des Werkes sichergestellt werden.

Eine weitere bevorzugte Ausgestaltung der erfindungsgemäßen Anlage ist dadurch gekennzeichnet, daß als Mischvorrichtung eine Vorrichtung vorgesehen ist, welche Zellstoff zerfasern und/oder mahlen kann. Derartige Maschinen sind z.B. Holländer, Kegelstoffmühlen, Refiner, Scheibenmühlen, Stofflöser und Pulper. Bei der Mahlung wird der Zellstoff zwischen einem bewegten und einem feststehenden Machinenteil bearbeitet.

Die Erfindung betrifft ferner ein integriertes Folien- und Faserwerk zur Herstellung cellulosischer Folien und Fasern nach dem Aminoxidverfahren, welches Werk im wesentlichen aufweist:
- eine Anlage zur Erzeugung von Zellstoff; und
- eine erfindungsgemäße Anlage zur Herstellung cellulosischer Folien und Fasern, wie sie hier beschrieben ist, welche der Anlage zur Erzeugung von Zellstoff nachgeschaltet ist.

Die Anlage zur Erzeugung von Zellstoff geht üblicherweise von cellulosehältigen Rohstoffen, insbesondere Holz, aus. Zur Herstellung des Zellstoffes wird der cellulosehältige Rohstoff zumeist einem chemischen Aufschluß unterworfen, wobei Begleitsubstanzen, wie Lignin und Hemicellulosen, herausgelöst werden. Der resultierende Zellstoff wird anschließend noch gereinigt und gebleicht.

Eine bevorzugte Ausgestaltung des erfindungsgemäßen integrierten Folien- und Faserwerkes besteht darin, daß die Anlage zur Erzeugung von Zellstoff so gestaltet ist, daß sie zur Erzeugung von feuchtem Zellstoff mit einem Wassergehalt von mindestens 20 Masse% Wasser, bezogen auf den Zellstoff, dient. In dieser Ausgestaltung des erfindungsgemäßen Werkes wird der Zellstoff vor der Weiterverarbeitung zur Suspension nicht getrocknet, wodurch die Zellulose im wäßrigen Aminoxid auf schonende Weise gemahlen und später leichter gelöst werden kann.

Die Erfindung betrifft darüberhinaus ein Verfahren zur Herstellung cellulosischer Folien und Fasern nach dem Aminoxidverfahren, welches gekennzeichnet ist durch die Kombination der Maßnahmen:
- Suspendieren von Zellstoff in einer wäßrigen Aminoxidlösung, um eine erste Suspension herzustellen, welche eine Trockenstoffdichte von nicht mehr als 10 Masse% Trockenzellstoff aufweist;
- Aufkonzentrieren dieser ersten Zellstoffsuspension, indem die Zellstoffsuspension auf einer Heizfläche mechanisch schichtartig ausgebreitet, erwärmt und unter intensivem Mischen und unter Abdampfung von Wasser über diese Heizfläche transportiert wird, bis eine konzentrierte Zellstoffsuspension gebildet ist;
- Herstellen einer formbaren Celluloselösung, indem die konzentrierte Zellstoffsuspension erwärmt und unter Abdampfung von Wasser in eine formbare Celluloselösung übergeführt wird; und
- Verarbeiten der formbaren Celluloselösung in an sich bekannter Weise zu Fasern, Folien bzw. anderen Formkörpern;
mit der Maßgabe, daß das Aufkonzentrieren der ersten Zellstoffsuspension und die Herstellung der formbaren Celluloselösung in verschiedenen Vorrichtungen durchgeführt werden.

Eine bevorzugte Ausführungsform des erfindungsgemäßen Verfahrens besteht darin, daß die konzentrierte Zellstoffsuspension in eine Celluloselösung übergeführt wird, indem die Suspension auf einer Heizfläche mechanisch schichtartig ausgebreitet, erwärmt und unter intensivem Mischen und unter Abdampfung von Wasser über diese Heizfläche transportiert wird, bis die formbare Celluloselösung gebildet ist.

Im erfindungsgemäßen Verfahren wird zur Herstellung der ersten Suspension bevorzugt ein feuchter Zellstoff eingesetzt, der einen Wassergehalt von mindestens 20 Masse% aufweist.

Eine weitere bevorzugte Ausgestaltung des erfindungsgemäßen Verfahrens besteht darin, daß das Suspendieren des Zellstoffs in der wäßrigen Aminoxidlösung durch Mahlen von vorzerkleinertem Zellstoff in der wäßrigen Aminoxidlösung vorgenommen wird. Es hat sich gezeigt, daß eine nasse Mahlung in Anwesenheit des Aminoxides den Zellstoff derart gut aufschließt bzw. aktiviert, daß die nachfolgende Lösungsherstellung erleichtert wird.

Die nasse Mahlung der Cellulose ist als solche aus der CA-PS 914674 bekannt. Sie dient dazu, Zellstoff, der für eine nachfolgende Umsetzung zu Celluloseacetat bestimmt ist, für die chemische Reaktion besser aufzuschließen.

Bei der nassen Mahlung werden die Cellulosefasern geschnitten, fibrilliert und gequollen. Unter Fibrillierung versteht der Fachmann das Aufspalten der Fasern parallel zur Faserachse. Ein großer Teil der Fibrillen bleibt nach dem Mahlen fransenartig an den Fasern hängen.

Bevorzugt weist die konzentrierte Suspension eine Trockenstoffdichte von nicht weniger als 12 Masse% Trockenzellstoff auf.

Das erfindungsgemäße Verfahren zeichnet sich dadurch aus, daß es kontinuierlich durchgeführt werden kann.

Im erfindungsgemäßen Verfahren zur Herstellung cellulosischer Folien und Fasern wird als Aminoxid am besten N-Methylmorpholin-N-oxid eingesetzt.

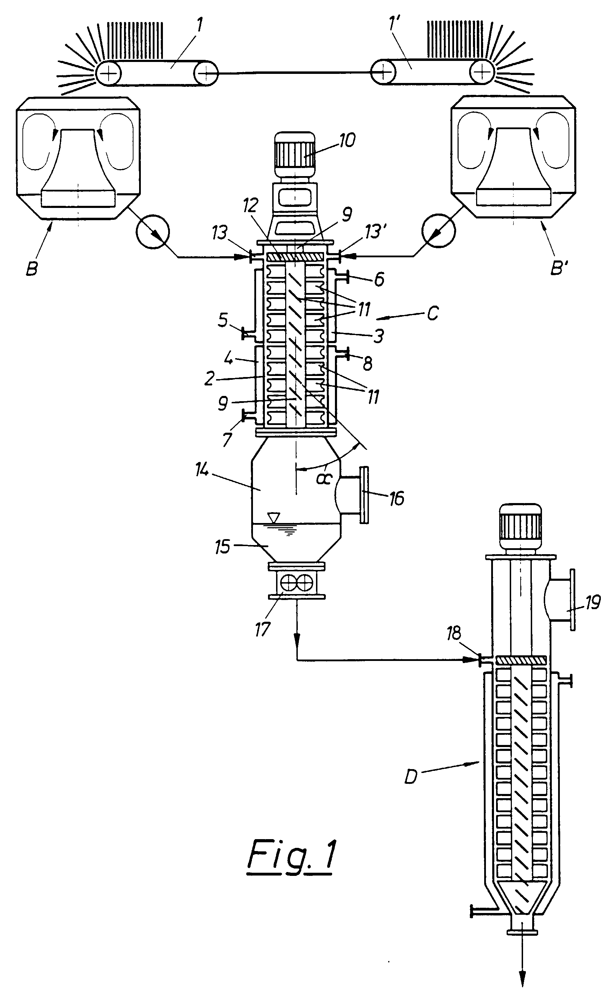

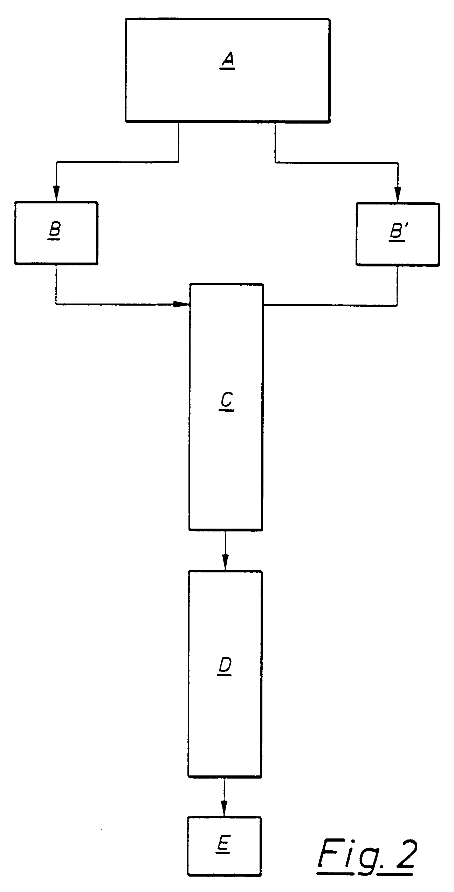

Im folgenden wird an Hand der beigefügten Zeichnung eine Ausführungsform der erfindungsgemäßen Anlage (Figur 1) und eine Ausführungsform des erfindungsgemäßen integrierten Folien- und Faserwerkes (Figur 2) schematisch gezeigt.

In der Figur 1 sind mit B bzw. B' zwei sogenannte Stofflöser bezeichnet, wie sie in der Papierherstellung verwendet werden. Stofflöser dienen bei der Papierherstellung dazu, aus Zellstoff und Wasser einen Faserbrei herzustellen, aus welchem schließlich Papier hergestellt wird. Stofflöser, die in der erfindungsgemäßen Anlage verwendet werden können, sind z.B. von der Firma Cellwood Grubbens AB unter der Produktbezeichnung Flachpulper Type W oder Vertikalpulper Type SRM erhältlich. In der dargestellten Ausführungsform der erfindungsgemäßen Anlage dienen die Stofflöser B, B' dazu, aus Zellstoff und wäßriger Aminoxidlösung die erste Suspension herzustellen, die im Dünnschichtbehandlungsapparat C aufkonzentriert und dann im Dünnschichtbehandlungsapparat D in die formbare Lösung übergeführt wird. Aus dem Dünnschichtbehandlungsapparat D wird die formbare Lösung abgezogen und auf bekannte Weise zu Folien, Fasern oder anderen Formkörpern verarbeitet. Diese Verarbeitung ist in der Figur 1 nicht dargestellt.

Die Funktion dieser Anlage ist nun folgende:

Zunächst wird eine vorbestimmte Menge an wäßrigem Aminoxid im Stofflöser B vorgelegt. Anschließend wird über eine Bandwaage 1 Zellstoff, im vorliegenden Fall als Blattzellstoff, dem Stofflöser B bei laufendem Rotor zudosiert, bis die gewünschte Trockenstoffdichte erreicht ist. Bevorzugte Trockenstoffdichten sind 4 bis 10 Masse% Zellstoff. Dann wird der Zellstoff noch etwa 15-30 Minuten bei laufendem Rotor im Stofflöser bearbeitet, um eine homogene, erste Suspension herzustellen.

Diese homogene, erste Suspension wird dem Dünnschichtbehandlungsapparat C, z.B. ein Filmtruder der Type HS/HSG der Firma Buss AG, Schweiz, zugeführt. Die für die Zeichnung gewählte Darstellung ist für einen Filmtruder typisch (siehe z.B. Erich Heimgartner, "Devolatilisation of Plastics", in Ingenieurwissen, Seiten 69-97, Düsseldorf 1980, VDI-Verlag GmbH). Die Figur 1 zeigt einen teilweisen Längsschnitt des Apparates. Mit 2 ist die Innenwand eines vorzugsweise aufrecht stehenden Rotationskörpers bezeichnet, der in der Darstellung nahezu über die gesamte Länge als zylindrischer Behälter ausgebildet ist. Die Innenwand 2 ist größtenteils von einem Heizmantel 3, 4 umgeben, mit Anschlüssen 5, 6, 7 und 8 für das Heizmedium, wobei die Anschlüsse 6 und 8 der Zuführung des Heizmediums (Sattdampf) und die Anschlüsse 5 und 7 seiner Abführung dienen.

Mit 9 ist ein vom Motor 10 angetriebener Rotor mit daran angesetzten Rotorblättern 11 bezeichnet. Die Rotorblätter 11, die beim dargestellten Ausführungsbeispiel eben ausgebildet sind, erstrecken sich radial zur Achse, wobei ihre Ebene einen Neigungswinkel a zur Achse des Rotors 9 aufweist, dessen Größe vorzugsweise verstellbar ist. Bei einem Teil der Rotorblätter 11 kann dieser Winkel auch 0° sein.

Über den Rotorblättern 11 ist am Rotor 9 ein Verteilring 12 angebracht, der die durch den Einlaß 13, 13' eingebrachte Cellulosesuspension an der Innenwand 2 schichtartig ausbreitet. Der Verteilring 12 befindet sich somit in Höhe des Einlasses 13, 13'.

Die Rotorblätter 11 weisen im gesamten Bereich des Behälters einen radialen Abstand zur Innenwand 2 des Behälters auf, der maximal 20 mm beträgt und über die Länge des Behälters 2 konstant oder variabel sein kann.

Am unteren Ende ist der Behälter kegelstumpfförmig erweitert und mündet in einen Aufnahmeraum 14 für die aufkonzentrierte Zellstoffsuspension 15. Eine Vorrichtung zum Rühren der konzentrierten Suspension im Aufnahmeraum 14 kann vorgesehen werden, indem z.B. ein Rührer mit dem Rotor verbunden wird, welcher Rührer in die Suspension im Aufnahmeraum 14 hineinragt (nicht dargestellt). Der Pegel der Suspension im Aufnahmeraum 14 kann mittels radioaktiver Füllstandsmessung überwacht werden.

Ferner ist eine öffnung 16 zur Evakuierung des Behälters und zum Abziehen von Wasserdampf vorgesehen. Die konzentrierte Zellstoffsuspension wird über eine Austragspumpe 17 ausgetragen und in den Dünnschichtbehandlungsapparat D übergeführt, der beispielsweise ein Filmtruder der Type HS 0200, Hersteller Buss AG, Schweiz, sein kann.

Die Funktion des Dünnschichtbehandlungsapparates C ist folgende:

Die erste Zellstoffsuspension wird kontinuierlich durch den Einlaß 13 in den Behälter eingebracht, der unter vermindertem Druck steht, dort vom Verteilring 12 erfaßt, an der Innenwand 2 ausgebreitet und von den Rotorblättern 11 entlang der indirekt geheizten Innenwand 2, die als Heizfläche dient, zum Auslaß am unteren Ende des Behälters transportiert. Für die indirekte Beheizung eignen sich Wärmeträgermedien, wie Wasser, öl oder Dampf.

Während des Transportes der Zellstoffsuspension entlang der indirekt beheizten Innenwand 2 wird die Suspension erwärmt, wobei gleichzeitig infolge des verminderten Druckes Wasser verdampft, so daß die Suspension aufkonzentriert wird. Durch die ständige Umwälzung der Cellulosesuspension in der dünnen Schicht kann in sehr kurzer Zeit Wasser abgedampft werden. Der Wasserdampf wird vorzugsweise in Transportrichtung der Zellstoffsuspension abgezogen.

Da der Dünnschichtbehandlungsapparat C kontinuierlich und der Stofflöser diskontinuierlich arbeitet, ist ein zweiter Stofflöser B' vorgesehen, der im Gegentakt zum Stofflöser B Zellstoffsuspension bildet, so daß der Apparat C ohne Unterbrechung betrieben werden kann.

Die aus dem Dünnschichtbehandlungsapparat C ausgetragene konzentrierte Zellstoffsuspension wird in den Filmtruder D übergeführt und in an sich bekannter Weise zu einer Lösung verarbeitet. Die Herstellung der Lösung ist in der EP-A - 0 356 419 beschrieben. Zur Lösungsherstellung wird die Suspension durch den Einlaß 18 in den Filmtruder eingebracht. Der Filmtruder D ist prinzipiell gleich aufgebaut wie der Filmtruder C: die eingebrachte Suspension wird von einem Verteilring erfaßt und von den Rotorblättern entlang einer Heizfläche transportiert und erwärmt, wobei gleichzeitig unter Vakuum weiteres Wasser abgedampft wird, bis gemäß dem ternären Zustandsdiagramm Cellulose/Aminoxid/Wasser (siehe z.B. WO94/28212) der Zellstoff in Lösung geht. Der Wasserdampf wird gegen die Transportrichtung der Suspension abgezogen. Die Absaugeöffnung für den Wasserdampf ist mit 19 dargestellt.

Die fertige formbare Celluloselösung wird aus dem Filmtruder D mittels einer Austragspumpe (nicht dargestellt) ausgetragen und in an sich bekannter Weise z.B. einer Spinnmaschine zugeführt und zu Fasern verarbeitet. Zweckmäßige Verfahren zur Herstellung von Fasern und Folien sind beispielsweise aus der WO 93/19230 bzw. der WO 95/07811 der Anmelderin bekannt.

Die Figur 2 zeigt schematisch eine Ausführungsform des erfindungsgemäßen Folien- bzw. Faserwerkes, wobei mit A eine Anlage zur Herstellung von vorzugsweise feuchtem Zellstoff bezeichnet ist. Mit B, B', C und D sind die in der Figur 1 dargestellten Stofflöser und Filmtruder bezeichnet. E symbolisiert an sich bekannte Vorrichtungen zur Herstellung von Fasern, Folien oder anderen Formkörpern.

Mit dem nachfolgenden Beispiel wird die Herstellung einer formbaren Celluloselösung beschrieben.

### Beispiel

100 kg Feuchtzellstoff der Type "Lenzing BKZ EM 9 feucht", welcher 50% Wasser enthält, wurde in einem Pulper der Firma Cellwood Grubbens AB (Vertikalpulper) in 600 kg einer im Handel erhältlichen Lösung von N-Methylmorpholin-N-oxid mit einem NMMO-Gehalt von ca. 58 Masse% etwa 5 Minuten lang suspendiert. Es wurde eine homogene Zellstoffsuspension mit einer Trockenstoffdichte von 8,33 Masse% Zellstoff erhalten.

Diese Suspension (58°C) wurde mit einer Geschwindigkeit von 600 kg/h in einen Filmtruder der Type Buss HS/HSG 0200 eingespeist und dort auf eine Trockenstoffdichte von 12,38 Masse% Zellstoff aufkonzentriert. Die Heizfläche des Filmtruders wurde mit Sattdampf von 160°C beheizt. Die Umfangsgeschwindigkeit des Rotors betrug 4 m/s. Es konnten pro Stunde etwa 404 kg konzentrierte Suspension mit einer Temperatur von 85°C aus dem Filmtruder abgezogen werden.

Die konzentrierte Suspension wurde mit einer Temperatur von 80°C in den Filmtruder der Type Buss HS 0200 mit einer Geschwindigkeit von etwa 404 kg/h eingespeist und dort weiter konzentriert und schließlich in eine formbare Lösung mit einer Cellulosekonzentration von 15,0% übergeführt. Die Heizfläche des Filmtruders wurde mit Sattdampf von 142°C beheizt. Die Umfangsgeschwindigkeit des Rotors betrug 4 m/s. Es konnten pro Stunde etwa 333 kg formbare Celluloselösung mit einer Temperatur von 105°C aus dem Filmtruder abgezogen werden.

## Patentansprüche

1. Anlage zur Herstellung cellulosischer Folien, Fasern und anderer Formkörper nach dem Aminoxidverfahren, welche Anlage im wesentlichen aufweist:
- eine Mischvorrichtung (B, B') zur Herstellung einer ersten Suspension von Zellstoff in einer wäßrigen Aminoxidlösung, welche Suspension eine Trockenstoffdichte von nicht mehr als 10 Masse% Trockenzellstoff aufweist;
- eine Vorrichtung (C) zur Aufkonzentrierung der in der Mischvorrichtung (B, B') hergestellten ersten Zellstoffsuspension, in welcher Vorrichtung (C) die Zellstoffsuspension auf einer Heizfläche mechanisch schichtartig ausgebreitet, erwärmt und unter intensivem Mischen und unter Abdampfung von Wasser über diese Heizfläche transportiert wird, bis eine vorbestimmte Menge Wasser abgedampft und eine konzentrierte Zellstoffsuspension gebildet ist;
- eine Vorrichtung (D), in welcher die in der Vorrichtung (C) hergestellte konzentrierte Zellstoffsuspension in eine formbare Lösung von Cellulose übergeführt wird, und
- eine mit der Vorrichtung (D) verbundene Vorrichtung (E), in welcher die formbare Celluloselösung zu cellulosischen Folien, Fasern und anderen Formkörpern verarbeitet wird.

2. Anlage nach Anspruch 1, dadurch gekennzeichnet, daß die Vorrichtung (D) als Dünnschichtbehandlungsapparat ausgebildet ist.

3. Anlage nach Anspruch 1 oder 2, dadurch gekennzeichnet, daß die Vorrichtung (C) als Dünnschichtbehandlungsapparat ausgebildet ist.

4. Anlage nach Anspruch 1, 2 oder 3, dadurch gekennzeichnet, daß mindestens zwei Mischvorrichtungen (B, B') vorgesehen sind, die mit der Vorrichtung (C) leitungsmäßig verbunden sind.

5. Anlage nach einem der Ansprüche 1 bis 4, dadurch gekennzeichnet, daß als Mischvorrichtung (B, B') eine Vorrichtung vorgesehen ist, welche Zellstoff zerfasern und/oder mahlen kann.

6. Integriertes Folien- und Faserwerk zur Herstellung cellulosischer Folien, Fasern und anderer Formkörper nach dem Aminoxidverfahren, welches Werk im wesentlichen aufweist:
- eine Anlage (A) zur Erzeugung von Zellstoff; und
- eine Anlage zur Herstellung cellulosischer Folien, Fasern und anderen Formkörpern gemäß einem oder mehreren der Ansprüche 1 bis 5, welche der Anlage (A) zur Erzeugung von Zellstoff nachgeschaltet ist.

7. Integriertes Folien- und Faserwerk nach Anspruch 6, dadurch gekennzeichnet, daß die Anlage (A) so gestaltet ist, daß sie zur Erzeugung von feuchtem Zellstoff mit einem Wassergehalt von mindestens 20 Masse% Wasser, bezogen auf den Zellstoff, dient.

8. Verfahren zur Herstellung cellulosischer Folien, Fasern und anderer Formkörper nach dem Aminoxidverfahren, gekennzeichnet durch die Kombination der Maßnahmen:
- Suspendieren von Zellstoff in einer wäßrigen Aminoxidlösung, um eine erste Suspension herzustellen, welche eine Trockenstoffdichte von nicht mehr als 10 Masse% Trockenzellstoff aufweist;
- Aufkonzentrieren dieser ersten Zellstoffsuspension, indem die Zellstoffsuspension auf einer Heizfläche mechanisch schichtartig ausgebreitet, erwärmt und unter intensivem Mischen und unter Abdampfung von Wasser über diese Heizfläche transportiert wird, bis eine konzentrierte Zellstoffsuspension gebildet ist;
- Herstellen einer formbaren Celluloselösung, indem die konzentrierte Zellstoffsuspension erwärmt und unter Abdampfung von Wasser in eine formbare Celluloselösung übergeführt wird; und
- Verarbeiten der formbaren Celluloselösung in an sich bekannter Weise zu Fasern, Folien bzw. Formkörpern;
mit der Maßgabe, daß das Aufkonzentrieren der ersten Zellstoffsuspension und die Herstellung der formbaren Celluloselösung in verschiedenen Vorrichtungen durchgeführt werden.

9. Verfahren nach Anspruch 8, dadurch gekennzeichnet, daß die formbare Celluloselösung hergestellt wird, indem die konzentrierte Zellstoffsuspension auf einer Heizfläche mechanisch schichtartig ausgebreitet, erwärmt und unter intensivem Mischen und unter Abdampfung von Wasser über diese Heizfläche transportiert wird, bis eine formbare Celluloselösung gebildet ist.

10. Verfahren nach Anspruch 8 oder 9, dadurch gekennzeichnet, daß zur Herstellung der ersten Suspension ein feuchter Zellstoff eingesetzt wird, der einen Wassergehalt von mindestens 20 Masse% aufweist.

11. Verfahren nach einem der Ansprüche 8 bis 10, dadurch gekennzeichnet, daß das Suspendieren des Zellstoffs in der wäßrigen Aminoxidlösung durch Zerfasern und/oder Mahlen von vorzerkleinertem Zellstoff in der wäßrigen Aminoxidlösung erreicht wird.

12. Verfahren nach einem der Ansprüche 8 bis 11, dadurch gekennzeichnet, daß die konzentrierte Suspension eine Trockenstoffdichte von nicht weniger als 12 Masse% Trockenzellstoff aufweist.

13. Verfahren nach einem der Ansprüche 8 bis 10, dadurch gekennzeichnet, daß es kontinuierlich durchgeführt wird.

14. Verfahren zur Herstellung cellulosischer Folien, Fasern und anderer Formkörper nach einem der Ansprüche 8 bis 11, dadurch gekennzeichnet, daß als Aminoxid N-Methylmorpholin-N-oxid eingesetzt wird.

## Claims

1. Installation for producing cellulosic sheets, fibres and other moulded bodies by the amine oxide process, which installation essentially comprises:
- a mixing device (B, B') for producing a first suspension of pulp in an aqueous amine oxide solution, which suspension has a dry matter density of not more than 10% by mass of dry pulp;
- a device (C) for concentrating the first pulp suspension produced in the mixing device (B, B'), in which device (C) the pulp suspension is spread out mechanically in layer form over a heating surface, heated and transported with intensive mixing and with evaporation of water over said heating surface until a predetermined amount of water has evaporated and a concentrated pulp suspension is formed;
- a device (D) in which the concentrated pulp suspension produced in the device (C) is converted into a mouldable solution of cellulose, and
- a device (E) which is connected to the device (D) and in which the mouldable cellulose solution is processed to form cellulosic sheets, fibres and other moulded bodies.

2. Installation according to Claim 1, characterized in that the device (D) is designed as thin-film treatment apparatus.

3. Installation according to Claim 1 or 2, characterized in that the device (C) is designed as thin-film treatment apparatus.

4. Installation according to Claim 1, 2 or 3, characterized in that at least two mixing devices (B, B') are provided which are connected by pipeline to the device (C).

5. Installation according to one of Claims 1 to 4, characterized in that a device which can shred and/or grind pulp is provided as mixing device (B, B').

6. Integrated sheet and fibre plant for producing cellulosic sheets, fibres and other moulded bodies by the amine oxide process, which plant essentially comprises:
- an installation (A) for producing pulp; and
- an installation for producing cellulosic sheets, fibres and other moulded bodies in accordance with one or more of Claims 1 to 5, which installation is connected downstream of the installation (A) for producing pulp.

7. Integrated sheet and fibre plant according to Claim 6, characterized in that the installation (A) is designed so that it serves to produce moist pulp having a water content of at least 20% by mass of water, relative to the pulp.

8. Process for producing cellulosic sheets, fibres and other moulded bodies by the amine oxide process, characterized by the combination of measures.
- suspension of pulp in an aqueous amine oxide solution in order to produce a first suspension which has a dry matter density of not more than 10% by mass of dry pulp;
- concentration of said first pulp suspension by mechanically spreading out the pulp suspension in layer form over a heating surface, heating it and transporting it with intensive mixing and with evaporation of water over said heating surface until a concentrated pulp suspension is formed;
- production of a mouldable cellulose solution by heating the concentrated pulp suspension and converting it into a mouldable cellulose solution with evaporation of water; and
- processing the mouldable cellulose solution in a manner known per se to form fibres, sheets or moulded bodies;
with the proviso that the concentration of the first pulp suspension and the production of the mouldable cellulose solution is performed in different devices.

9. Process according to Claim 8, characterized in that the mouldable cellulose solution is produced by mechanically spreading out the concentrated pulp solution in layer form over a heating surface, heating it and transporting it with intensive mixing and with evaporation of water over said heating surface until a mouldable cellulose solution is formed.

10. Process according to Claim 8 or 9, characterized in that a moist pulp which has a water content of at least 20% by mass is used to produce the first suspension.

11. Process according to one of Claims 8 to 10, characterized in that the suspension of the pulp in the aqueous amine oxide solution is achieved by shredding and/or grinding precomminuted pulp in the aqueous amine oxide solution.

12. Process according to one of Claims 8 to 11, characterized in that the concentrated suspension has a dry matter density of not less than 12% by mass of dry pulp.

13. Process according to one of Claims 8 to 10, characterized in that it is performed continuously.

14. Process for producing cellulosic sheets, fibres and other moulded bodies according to one of Claims 8 to 11, characterized in that N-methylmorpholine N-oxide is used as amine oxide.

## Revendications

1. Installation pour la fabrication de feuilles, fibres et autres corps façonnés cellulosiques selon le procédé à l'aminoxyde, laquelle installation comporte essentiellement :
- un dispositif mélangeur (B, B') pour la fabrication d'une première suspension de pâte de cellulose dans une solution aqueuse d'aminoxyde, laquelle suspension présente une densité de matière sèche qui ne dépasse pas 10 % en masse de pâte de cellulose sèche ;
- un dispositif (C) pour la concentration de la première suspension de pâte de cellulose fabriquée dans le dispositif mélangeur (B, B'), dispositif (C) dans lequel la suspension de pâte de cellulose est étalée mécaniquement en forme de couche sur une surface chauffante, chauffée et transportée sur cette surface chauffante avec mélange intensif et avec évaporation de l'eau jusqu'à ce qu'une quantité d'eau prédéterminée soit évaporée et jusqu'à ce qu'une suspension de pâte de cellulose concentrée soit formée ;
- un dispositif (D) dans lequel la suspension de pâte de cellulose concentrée fabriquée dans le dispositif ( C ) est convertie en une solution de cellulose façonnable, et
- un dispositif (E) relié au dispositif (D) et dans lequel la solution de cellulose façonnable est mise sous forme de feuilles, fibres et autres corps façonnés cellulosiques.

2. Installation selon la revendication 1, caractérisée en ce que le dispositif (D) est sous forme d'appareil de traitement de couche mince.

3. Installation selon la revendication 1 ou 2, caractérisée en ce que le dispositif (C) est sous forme d'appareil de traitement de couche mince.

4. Installation selon la revendication 1, 2 ou 3, caractérisée en ce qu'il est prévu au moins deux dispositifs mélangeurs (B, B') qui sont reliés par des conduites au dispositif (C).

5. Installation selon l'une des revendications 1 à 4, caractérisée en ce qu'il est prévu comme dispositif mélangeur (B, B') un dispositif qui peut triturer et/ou broyer la pâte de cellulose.

6. Usine intégrée de feuilles et de fibres pour la fabrication de feuilles, fibres et autres corps façonnés cellulosiques selon le procédé à l'aminoxyde, laquelle usine comporte essentiellement :
- une installation (A) pour la fabrication de pâte de cellulose ; et
- une installation pour la fabrication de feuilles, fibres et autres corps façonnés cellulosiques selon une ou plusieurs des revendications 1 à 5, qui est disposée en aval de l'installation (A) pour la production de pâte de cellulose.

7. Usine intégrée de feuilles et de fibres selon la revendication 6, caractérisée en ce que l'installation (A) est agencée de telle manière qu'elle sert à la production de pâte de cellulose humide ayant une teneur en eau d'au moins 20 % en masse d'eau, par rapport à la pâte de cellulose.

8. Procédé de fabrication de feuilles, fibres et autres corps façonnés cellulosiques selon le procédé à l'aminoxyde, caractérisé par la combinaison des dispositions :
- mise en suspension de pâte de cellulose dans une solution aqueuse d'aminoxyde pour fabriquer une première suspension qui présente une densité de matière sèche qui ne dépasse pas 10 % en masse de pâte de cellulose sèche ;
- concentration de cette première suspension de pâte de cellulose par le fait que la suspension de pâte de cellulose est étalée mécaniquement en forme de couche sur une surface chauffante, chauffée et transportée sur cette surface chauffante avec mélange intensif et avec évaporation de l'eau, jusqu'à ce qu'une suspension de pâte de cellulose concentrée soit formée ;
- fabrication d'une solution de cellulose façonnable par le fait que la suspension de pâte de cellulose concentrée est chauffée et est convertie en une solution de cellulose façonnable par évaporation de l'eau ; et
- transformation de la solution de cellulose façonnable, de manière connue en soi, en fibres, feuilles ou corps façonnés ;
avec la condition que la concentration de la première suspension de pâte de cellulose et la fabrication de la solution de cellulose façonnable sont réalisées dans des dispositifs différents.

9. Procédé selon la revendication 8, caractérisé en ce que la solution de cellulose façonnable est fabriquée par le fait que la suspension de pâte de cellulose concentrée est étalée mécaniquement en forme de couche sur une surface chauffante, chauffée et transportée sur cette surface chauffante avec mélange intensif et avec évaporation de l'eau, jusqu'à ce qu'une solution de cellulose façonnable soit formée.

10. Procédé selon la revendication 8 ou 9, caractérisé en ce qu'une pâte de cellulose humide qui présente une teneur en eau d'au moins 20 % en masse est utilisée pour la fabrication de la première suspension.

11. Procédé selon l'une des revendications 8 à 10, caractérisé en ce que la mise en suspension de la pâte de cellulose dans la solution aqueuse d'aminoxyde est obtenue par trituration et/ou broyage de pâte de cellulose prébroyée dans la solution aqueuse d'aminoxyde.

12. Procédé selon l'une des revendications 8 à 11, caractérisé en ce que la suspension concentrée présente une densité de matière sèche d'au moins 12 % en masse de pâte de cellulose sèche.

13. Procédé selon l'une des revendications 8 à 10, caractérisé en ce qu'il est mis en oeuvre de manière continue.

14. Procédé de fabrication de feuilles, fibres et autres corps façonnés cellulosiques selon l'une des revendications 8 à 11, caractérisé en ce que le N-méthylmorpholine-N-oxyde est utilisé comme aminoxyde.
